# DEMANDE DE BREVET EUROPEEN

(11) **EP 2 767 935 A1**
(43) Date de publication de la demande: **20.08.2014**
(21) Numéro de dépôt: 13155635.9
(22) Date de dépôt: 18.02.2013
(51) Int. Cl.: G06K 19/077

(54) **Couche plastique pour carte électronique**

(71) Demandeur: NagraID S.A., 2301 La Chaux-de-Fonds (CH)
(72) Inventeur: Droz, François, 2035 Corcelles (CH)
(74) Mandataire: Surmely, Gérard

(57) **Abrégé**

La feuille plastique (22), intervenant dans la formation d'une pluralité de cartes électroniques qui comprennent respectivement une pluralité d'unités électroniques, est formée d'un premier matériau (2), ayant une première dureté ou une première température de ramollissement Vicat, et d'un deuxième matériau (6) ayant une deuxième dureté inférieure à la première dureté, respectivement une deuxième température de ramollissement Vicat inférieure à la première température de ramollissement Vicat. Le deuxième matériau est situé dans une pluralité de zones de la feuille plastique qui sont respectivement destinées à recevoir au moins partiellement ladite pluralité d'unités électroniques par pénétration du second matériau lors de la fabrication de la pluralité de cartes électroniques.

## Description

### Domaine technique

La présente invention concerne le domaine des cartes électroniques incorporant au moins une unité électronique, en particulier un circuit intégré, à l'intérieur du corps de carte. En particulier, l'invention concerne les matériaux plastiques formant le corps de carte. L'invention concerne également un procédé de fabrication d'une couche plastique destinée à recevoir une pluralité d'unités électroniques lors de la formation d'une pluralité de cartes.

### Arrière-plan technologique

Il est connu notamment du document EP 1 846 874 un procédé de fabrication de cartes électroniques dans lequel il est prévu d'apporter un ensemble formé d'un circuit intégré et de segments conducteurs sur un substrat et d'introduire au moins le circuit intégré dans le substrat. Plusieurs variantes sont proposées. Dans une première variante, le circuit intégré est enfoncé directement dans la matière formant le substrat, ce dernier étant relativement dur puisqu'il présente des pistes conductrices à sa surface. La pénétration dans la matière se fait généralement avec un apport de chaleur de manière à ramollir au moins localement la matière du substrat. Dans une deuxième variante, préalablement à l'apport du circuit intégré, il est prévu un logement dans le substrat dont les dimensions correspondent sensiblement à celles du circuit intégré ou sont légèrement différentes. Dans une troisième variante, il est prévu de former un logement ayant des dimensions supérieures à celles du circuit intégré et de déposer dans ce logement, avant l'apport de l'ensemble circuit intégré et segments conducteurs, une substance adhésive; puis un dispositif de pose enfonce alors le circuit intégré dans la substance adhésive qui est répartie et refoulée dans l'espace situé entre le circuit intégré et la paroi du logement.

Les variantes décrites ci-avant, bien que réalisables, présentent chacune un inconvénient. La première variante est confrontée au fait que le substrat est généralement formé par une couche plastique relativement dure ; ce qui nécessite des précautions particulières lors de la fabrication des cartes électroniques et notamment de ramollir au moins localement les zones pénétrées par les circuits intégrés, de manière à ne pas endommager ces circuits intégrés. De plus, une fois la carte terminée, le circuit intégré est entouré d'un matériau relativement dur ; ce qui peut engendrer des contraintes mécaniques excessives sur ce circuit intégré lors de l'utilisation de la carte, en particulier lors de flexions ou de torsions de la carte. La deuxième variante, outre le dernier problème mentionné pour la première variante, pose un problème de fabrication car elle nécessite une grande précision de positionnement du circuit intégré relativement au logement avant de l'introduire dedans. Ceci est réalisable avec les installations disponibles, mais la production de cartes électroniques est alors plus couteuse. La troisième variante peut résoudre certains des problèmes indiqués ci-avant, mais elle nécessite un apport localisé et dosé de gouttes de résine dans les logements du substrat sur le site de fabrication des cartes électroniques.

### Résumé de l'invention

La présente invention a pour but de résoudre les inconvénients susmentionnés de l'art antérieur et de perfectionner le procédé de fabrication de cartes électroniques.

A cet effet, la présente invention a pour objet une feuille plastique intervenant dans la formation d'une pluralité de cartes électroniques qui comprennent respectivement une pluralité d'unités électroniques. Cette feuille plastique est formée d'un premier matériau, ayant une première dureté ou une première température de ramollissement Vicat, et d'un deuxième matériau ayant une deuxième dureté inférieure à la première dureté, respectivement une deuxième température de ramollissement Vicat inférieure à la première température de ramollissement Vicat. Le deuxième matériau est situé dans une pluralité de zones de la feuille plastique qui sont respectivement destinées à recevoir, par pénétration du deuxième matériau, au moins partiellement la pluralité d'unités électroniques.

La présente invention a également pour objet un procédé de fabrication d'une feuille plastique selon l'invention qui sera décrit par la suite dans le cadre de la description détaillée.

### Brève description des dessins

L'invention sera décrite ci-après à l'aide de dessins annexés, donnés à titre d'exemples nullement limitatifs, dans lesquels :
- La Figure 1 montre schématiquement une étape du procédé de fabrication selon l'invention d'une feuille plastique bi-matière ;
- Les Figures 2 et 3 montrent schématiquement en coupe une étape suivante du procédé de fabrication selon l'invention ;
- La Figure 4 est une vue schématique en coupe d'un premier mode de réalisation d'une feuille plastique bi-matière selon l'invention ;
- La Figure 5 est une vue schématique en coupe d'un deuxième mode de réalisation d'une feuille plastique bi-matière selon l'invention ;
- La Figure 6 est une vue schématique en coupe d'un troisième mode de réalisation d'une feuille plastique bi-matière selon l'invention ;
- La Figure 7 est une vue schématique de dessus d'un quatrième mode de réalisation d'une feuille plastique bi-matière selon l'invention ;
- La Figure 8 montre schématiquement une utilisation d'une feuille bi-matière selon l'invention dans un premier procédé de fabrication de cartes électroniques ;
- La Figure 9 montre un produit intermédiaire intervenant dans le premier procédé de fabrication de cartes électroniques et résultant de l'étape décrite à la Figure 8 ;
- La Figure 10 montre schématiquement une utilisation d'une feuille bi-matière selon l'invention dans un deuxième procédé de fabrication de cartes électroniques ;
- La Figure 11 montre un produit intermédiaire intervenant dans le deuxième procédé de fabrication de cartes électroniques et résultant de l'étape décrite à la Figure 10.

### Description détaillée de l'invention

On décrira premièrement un procédé de fabrication d'une feuille plastique intervenant dans la formation d'une pluralité de cartes électroniques qui comprennent respectivement une pluralité d'unités électroniques. Cette feuille plastique est destinée à recevoir au moins partiellement la pluralité d'unités électroniques par pénétration dans la matière qui la forme, comme ceci sera exposé par la suite.

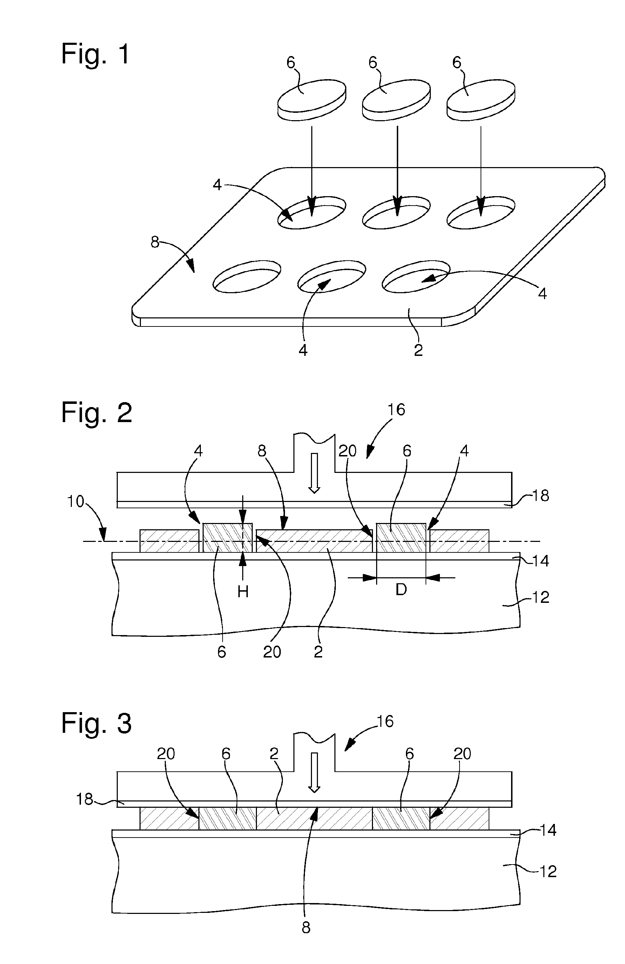

Selon l'invention, le procédé de fabrication d'une feuille plastique comprend les étapes suivantes :
A) Fournir une première feuille 2 formée d'un premier matériau ayant une première dureté ou une première température de ramollissement Vicat, cette première feuille présentant une pluralité d'ouvertures 4 (voir Figure 1);
B) Apporter respectivement dans ladite pluralité d'ouvertures 4 une pluralité de pastilles 6 formées d'un deuxième matériau ayant une deuxième dureté inférieure à la première dureté, respectivement une deuxième température de ramollissement Vicat inférieure à la première température de ramollissement Vicat (voir Figures 1 et 2 ; on notera que, pour des raisons de clarté du dessin, seules les pastilles prévues pour une rangée d'ouvertures ont été représentées à la Figure 1).

Dans une variante, il est prévu que la première feuille présente une pluralité de cavités (trous borgnes) et les pastilles sont apportées dans cette pluralité de cavités. Dans une autre variante, la première feuille présente des ouvertures (qui traversent la première feuille) et des cavités qui reçoivent toutes des pastilles formées d'un deuxième matériau, ces ouvertures et ces cavités étant prévues pour recevoir respectivement des premières et deuxièmes unités électroniques.

La pluralité de pastilles 6, apportées dans l'étape B) mentionnée ci-avant, présentent, dans leur plan géométrique parallèle au plan général 10 de la première feuille 2, des dimensions inférieures à celles des ouvertures 4 ou/et des cavités correspondantes et une hauteur H, selon un axe perpendiculaire audit plan général, supérieure à celle des ouvertures ou/et des cavités correspondantes, de manière qu'elles s'élèvent au-dessus d'une face 8 de la première feuille. Pour des pastilles circulaires, c'est le diamètre D de ces pastilles circulaires qui sera inférieur au diamètre des ouvertures 4 ou/et des cavités correspondantes. Pour des pastilles rectangulaires, les dimensions inférieures sont naturellement la largeur et la longueur de ces pastilles rectangulaires. D'autres géométries des pastilles dans le plan général 10 peuvent être prévues dans d'autres variantes.

De préférence, la première feuille 2 et les pastilles 6 sont apportées sur un support 12 présentant une couche supérieure 14 qui est non-adhérente à cette première feuille et ces pastilles. La couche supérieure 14 est constituée par exemple de Téflon^{®}. Le support 12 fait par exemple partie d'une presse 16 représentée schématiquement à la Figure 2.

Suite à l'apport de chaque pastille 6 dans une ouverture 4 ou cavité correspondante, il est prévu pour cette pastille l'étape suivante :
C) Exercer une pression sur la pastille 6 de manière à réduire son hauteur pour que cette pastille affleure sensiblement la face 8 de la première feuille 2 et qu'elle soit en contact au moins partiellement avec la paroi latérale 20 de l'ouverture ou de la cavité correspondante, la pastille 6 étant alors liée à la première feuille.

Dans un premier mode de mise en oeuvre montré à la Figure 3, l'étape C) est réalisée à l'aide de la presse de laminage 16. La surface inférieure de la partie supérieure de cette presse est formée avantageusement par une couche de Téflon^{®} 18. On notera que les couches 14 et 18 peuvent être remplacées par des feuilles non-adhérentes qui sont amovibles. Dans un mode de mise en oeuvre préféré, l'étape C) consiste en un laminage à chaud, la pluralité de pastilles 6 étant au moins partiellement soudées à la première feuille 2. La presse 16 comprend alors des moyens de chauffage. Dans ce premier mode de mise en oeuvre, l'ensemble des pastilles est apporté dans les ouvertures correspondantes et ensuite l'étape C) susmentionnée est effectuée simultanément pour la pluralité de pastilles. Dans un deuxième mode de mise en oeuvre non représenté aux figures, il est prévu que les étapes B) et C) sont effectuées cycliquement pour chaque pastille ou pour des sous-ensembles de pastilles parmi la pluralité de pastilles. Dans une première variante, chaque pastille est apportée individuellement à l'aide d'un outil dans l'ouverture correspondante. Ensuite, une thermode est appliquée individuellement sur la pastille pour réaliser l'étape C) ; et on recommence ces deux étapes avec la pastille suivante. De préférence, la thermode a des dimensions légèrement supérieures à celles des ouvertures. La thermode recouvre ainsi l'ouverture et une région périphérique de cette ouverture lors de l'écrasement d'une pastille introduite dans cette ouverture. On peut parler ainsi d'un laminage localisé. Dans une variante particulière, le premier outil et la thermode forment un seul et même outil et l'étape C) suit directement l'étape B) pour chaque pastille. Dans une deuxième variante, un premier sous-ensemble de pastilles est apporté dans un premier sous-ensemble d'ouvertures correspondantes. Ensuite, plusieurs thermodes sont apportées respectivement sur le sous-ensemble de pastilles et l'étape C) du procédé est effectuée simultanément pour ce sous-ensemble de pastilles. Le sous-ensemble d'ouvertures est par exemple une ligne ou une colonne d'ouvertures dans une première feuille ayant une matrice d'ouvertures.

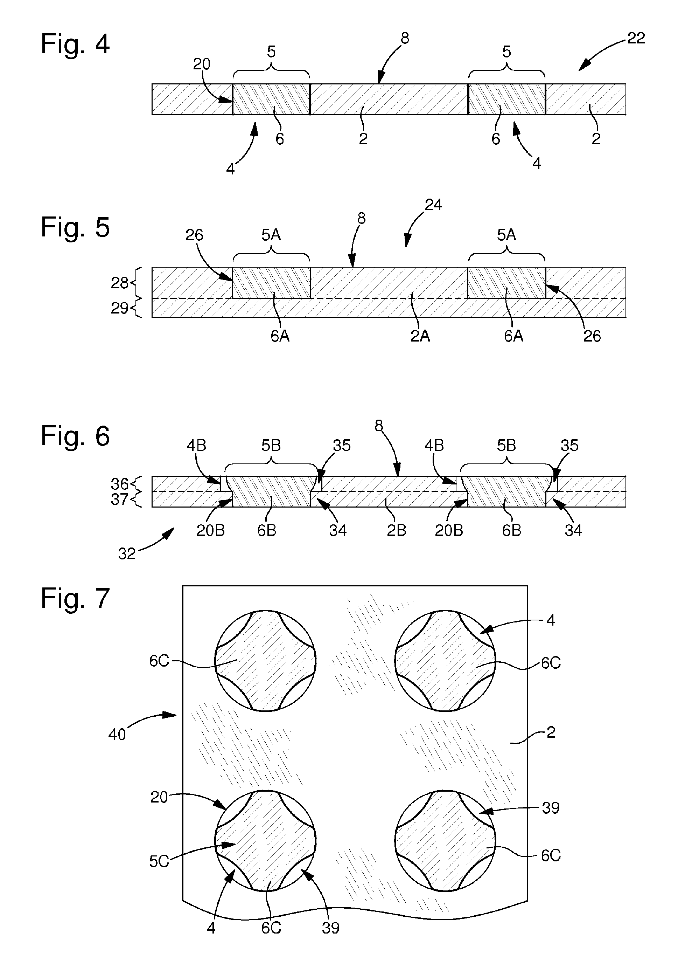

Un premier mode de réalisation d'une feuille plastique bi-matière 22 selon l'invention, obtenue notamment par le procédé de fabrication décrit ci-avant, est représenté en coupe à la Figure 4. Cette feuille plastique est formée d'une première feuille 2 constituée d'un premier matériau, ayant une première dureté. Cette première feuille 2 présente une pluralité d'ouvertures qui sont remplies par des pastilles 6 constituées d'un deuxième matériau ayant une deuxième dureté inférieure à la première dureté susmentionnée. Le deuxième matériau adhère à la paroi latérale 20 des trous. La pluralité d'ouvertures 4 définissent une pluralité de zones 5 de la feuille plastique 22 dans lesquelles est situé le second matériau. Cette pluralité de zones de moindre dureté sont respectivement destinées à recevoir une pluralité d'unités électroniques par pénétration du second matériau, comme cela sera exposé par la suite.

Dans une première variante, la deuxième dureté est inférieure à 96 Shore A. Dans une deuxième variante, la première dureté est supérieure à 60 Shore D. Dans un mode de réalisation particulier, les première et deuxième variantes sont avantageusement combinées. De préférence, la deuxième matière est constituée par un élastomère de polyuréthane thermoplastique. Pour la définition des unités Shore A et Shore D, on se référera à la norme ISO 868, respectivement à la norme DIN 53505. Des élastomères de polyuréthane thermoplastique sont notamment vendus par la société BASF sous l'appellation Elastollan^{®}.

Dans une alternative de l'invention, la feuille plastique selon l'invention est formée d'un premier matériau 2, ayant une première température de ramollissement Vicat, et d'un deuxième matériau 6 ayant une deuxième température de ramollissement Vicat qui est inférieure à la première température de ramollissement Vicat. Dans une première variante, la deuxième température de ramollissement Vicat à 10N est inférieure à cinquante degrés (50°). Dans une deuxième variante, la première température de ramollissement Vicat à 10 N est supérieure à soixante cinq degrés (65°). Dans un mode de réalisation particulier, les première et deuxième variantes sont avantageusement combinées. De préférence, la deuxième matière est constituée par un élastomère de polyuréthane thermoplastique. La température de ramollissement Vicat est la mesure de la température pour laquelle une tige de 1 mm² de section pénètre de 1 mm une matière thermoplastique testée, sous l'application d'une charge normalisée de 10 N ou 50 N (Pour de plus amples informations, on se référera à la norme ISO 306). Les divers modes de réalisation de la feuille plastique selon l'invention s'appliquent également à cette alternative.

Un deuxième mode de réalisation d'une feuille plastique bi-matière 24 selon l'invention est représenté en coupe à la Figure 5. Cette feuille plastique 24 se distingue du premier mode de réalisation par le fait qu'elle est formée d'une première feuille 2A constituée dudit premier matériau et présentant une pluralité de cavités 26 remplies de pastilles 6A constituées dudit deuxième matériau. La pluralité de cavités 26 débouchent sur la face supérieure 8 de la feuille plastique 24 et définissent une pluralité de zones 5A dans lesquelles est situé le second matériau. Cette pluralité de zones de moindre dureté sont respectivement destinées à recevoir une pluralité d'unités électroniques par pénétration du second matériau, comme cela sera exposé par la suite. On remarquera que, dans une variante de réalisation, la première feuille 2A est formée par deux couches 28 et 29, la couche 28 présentant une pluralité de trous alors que la couche 29 est continue et définit le fond des cavités 26. Ces couches 28 et 29 peuvent être soudées ou collées dans une étape préliminaire à l'apport de la pluralité de pastilles 6A. De préférence, elles sont soudées au cours de l'étape C) du procédé de fabrication décrit précédemment, simultanément à l'écrasement des pastilles 6A et au soudage de celles-ci à la première feuille 2A.

On remarquera que, dans une variante, les pastilles 6 ou 6A peuvent être collées respectivement dans les ouvertures 4 ou les cavités 26. Dans une autre variante, le deuxième matériau est introduit dans les ouvertures 4 ou les cavités 26 par une technique d'injection ou de coulage de ce deuxième matériau.

Un troisième mode de réalisation d'une feuille plastique bi-matière 32 selon l'invention est représenté en coupe à la Figure 6. Il se distingue des modes de réalisation précédents par le fait que la pluralité d'ouvertures 4B dans la première feuille 2B présentent chacune dans sa partie inférieure un épaulement annulaire 34. Les pastilles 6B présentent un diamètre initial tel qu'elles viennent s'appuyer contre les parois latérales 20B des épaulements respectifs 34 lors de l'écrasement intervenant dans l'étape C) du procédé de fabrication décrit précédemment, sans toutefois remplir les régions annulaires 35 situées au-dessus des épaulements annulaires. Les pastilles 6B définissent, au niveau de la face supérieure 8 de la feuille plastique 32, des zones 5B de moindre dureté ayant un diamètre inférieur à celui des ouvertures 4B respectives. L'espace restant dans chaque région annulaire 35 est avantageux lors de la pénétration ultérieure d'une unité électronique, en particulier lorsque celle-ci présente des dimensions relativement grandes et que le deuxième matériau constituant les pastilles 6B n'est pas compressible. Finalement, on notera que, comme dans le deuxième mode de réalisation, la première feuille 2B est formée dans une variante préférée de deux couches 36 et 37 présentant respectivement une première pluralité de trous et une deuxième pluralité de trous, cette dernière ayant des diamètres inférieures à ceux de la première pluralité de trous. Ces deux couches 36 et 37 sont de préférence laminées à chaud dans une étape préliminaire à l'apport des pastilles 6B dans les ouvertures 4B.

On notera que, dans le cas où il est prévu des cavités dans la première feuille plastique, il est possible de prévoir des pastilles avec des dimensions telles que ces pastilles ne viennent pas en contact avec la paroi latérale des cavités, la liaison de ces pastilles avec la première feuille étant réalisée via le fond des cavités. On peut ainsi avoir dans les cavités un espace restant (espace vide) de forme circulaire autour des pastilles.

Un quatrième mode de réalisation d'une feuille plastique bi-matière 40 selon l'invention est représenté à la Figure 7. Il se distingue par le fait que les pastilles 6C introduites dans les ouvertures 4 de la première feuille 2 présentent chacune un profil, dans le plan général de cette première feuille, qui est différent du contour de l'ouverture correspondante. Dans le cadre du procédé de fabrication décrit précédemment, le profil initial de la pastille 6C est choisi de manière que, lors de l'étape C) de ce procédé, des parties protubérantes de cette pastille viennent en contact avec la paroi latérale 20 de l'ouverture correspondante 4, tout en laissant des zones vides 39 dans cette ouverture. Lors de l'écrasement terminal des pastilles 6C, les parties protubérantes sont légèrement déformées dû à la pression exercée par la paroi latérale 20 sur ces parties protubérantes qui finalement adhère au premier matériau constituant la première feuille 2. Dans une variante, seul un faible apport de chaleur est prévu pour déformer les pastilles et assurer leur liaison à la première feuille. On notera qu'il est aussi possible de prévoir au moins un évidement dans la pastille, notamment dans la région centrale. De préférence, cet évidement est réalisé en fonction de l'unité ou des unités électroniques à introduire dans l'ouverture correspondante. Par exemple, cet évidement sera positionné dans une zone prévue pour la partie de plus grande épaisseur de l'unité électronique ou, dans le cas de plusieurs unités électroniques introduites dans une même ouverture de la première feuille 2, cet évidemment sera positionné dans la zone prévue pour l'unité électronique ayant la plus grande épaisseur. Dans une variante, c'est la partie la plus fragile d'une unité électronique ou l'unité électronique la plus fragile parmi les unités électroniques prévues qui est positionnée dans la zone de l'évidement.

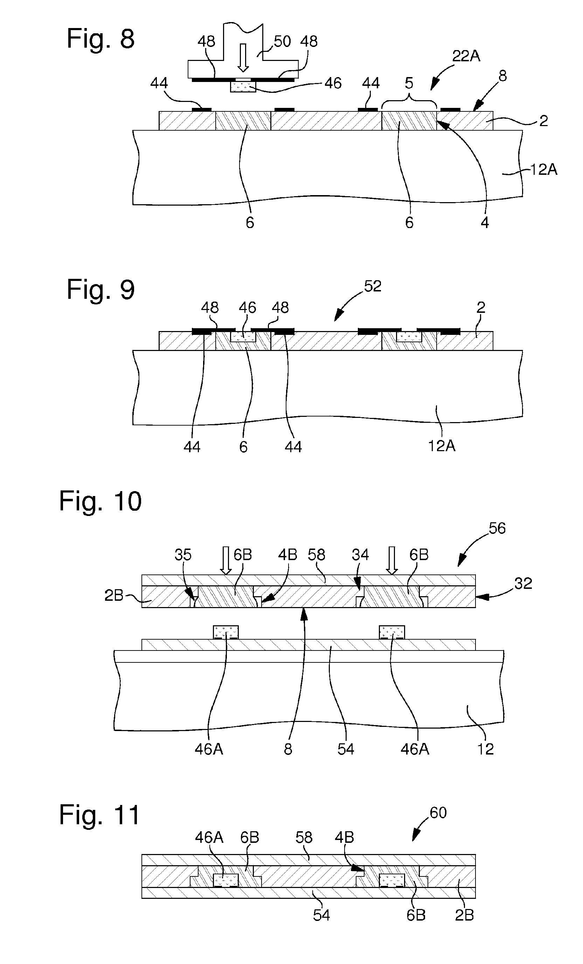

La Figure 8 montre schématiquement une utilisation d'une feuille plastique 22A selon l'invention dans un premier procédé de fabrication de cartes électroniques. La feuille plastique 22A est apportée sur un support 12A. Cette feuille plastique est semblable à la feuille plastique 22 décrite précédemment, avec en plus un circuit électrique disposé sur sa face supérieure 8. Ce circuit électrique comprend à la périphérie de chaque zone 5, définie par une pastille 6 de faible dureté, des plages de contact 44 pour une connexion électrique à une unité électronique 46. Cette unité électronique 46 et des segments conducteurs 48 sont apportés à l'aide d'un outil de préhension 50 au-dessus de la feuille plastique 22A de manière que l'unité électronique soit située au-dessus d'une pastille 6. Ensuite, l'outil de préhension descend l'ensemble formé de l'unité électronique et des segments conducteurs en direction de la pastille 6 et introduit l'unité électronique 46 dans le matériau relativement tendre constituant cette pastille. Ainsi, cette unité électronique pénètre facilement dans la feuille plastique selon l'invention. Dans une variante, il est prévu que le matériau constituant la pastille 6 soit compressible. On obtient alors le produit intermédiaire 52 représenté en coupe à la Figure 9. Le matériau de la pastille 6 est soit compressé, soit dans un état comprimé. Dans une autre variante, notamment lorsqu'il s'agit d'un circuit intégré de petites dimensions, le matériau constituant la pastille 6 sort un peu de l'ouverture 4 lors de la pénétration de l'unité électronique dans cette ouverture. Ceci peut permettre de recouvrir partiellement la surface supérieure du circuit intégré et éviter des problèmes électriques ultérieurs entre ce circuit intégré et les segments conducteurs 48 qui doivent avoir un contact électrique seulement avec une plage déterminée du circuit intégré. Dans une variante de mise en oeuvre, la pastille 6 présente une moindre température de ramollissement Vicat et la pénétration de l'unité électronique 46 dans cette pastille est effectuée avec un apport de chaleur permettant de ramollir rapidement cette pastille sans déformer la première feuille plastique 2 et sans risque de détériorer l'unité électronique.

La Figure 10 montre schématiquement une utilisation d'une feuille plastique 56 selon l'invention dans un deuxième procédé de fabrication de cartes électroniques. La feuille plastique 56 est formée par une feuille plastique 32 décrite précédemment et un film plastique continue 58 fermant les ouvertures 4B du côté de la face arrière de la feuille plastique 32. On remarque que les ouvertures 4B définissent, dans la feuille plastique 56, une pluralité de cavités. Un circuit imprimé 54 avec des unités électroniques 46A agencées à sa surface supérieure est apporté sur un support 12. La feuille plastique 56 est apportée en face du circuit imprimé 58 et déposée sur ce circuit imprimé de manière que les unités électroniques soient situées en regard des pastilles 6B. Ensuite, à l'aide d'une presse, on introduit les unités électroniques dans les cavités 4B en pénétrant dans le matériau constituant les pastilles 6B. Lors de cette pénétration, les pastilles 6B sont déformées et viennent remplir au moins substantiellement les régions annulaires 35 par déplacement du matériau des pastilles de manière à réduire substantiellement les espaces restant initialement dans les cavités 4B. On obtient ainsi une carte électronique 60 représentée en coupe à la Figure 11.

## Revendications

1. Feuille plastique (22, 24, 32, 40, 22A, 56) intervenant dans la formation d'une pluralité de cartes électroniques qui comprennent respectivement une pluralité d'unités électroniques (46, 46A), **caractérisée en ce que** cette feuille plastique est formée d'un premier matériau, ayant une première dureté ou une première température de ramollissement Vicat, et d'un deuxième matériau ayant une deuxième dureté inférieure à la première dureté, respectivement une deuxième température de ramollissement Vicat inférieure à la première température de ramollissement Vicat, le deuxième matériau étant situé dans une pluralité de zones (5, 5A, 5B, 5C) de la feuille plastique qui sont respectivement destinées à recevoir au moins partiellement ladite pluralité d'unités électroniques par pénétration du deuxième matériau.

2. Feuille plastique selon la revendication 1, **caractérisée en ce que** ladite deuxième température de ramollissement Vicat à 10 N est inférieure à cinquante degrés (50°).

3. Feuille plastique selon la revendication 1, **caractérisée en ce que** ladite deuxième dureté est inférieure à 96 Shore A.

4. Feuille plastique selon l'une des revendications 1 à 3, **caractérisée en ce que** ladite première température de ramollissement Vicat à 10 N est supérieure à soixante cinq degrés (65°)

5. Feuille plastique selon l'une des revendications 1 à 3, **caractérisée en ce que** ladite première dureté est supérieure à 60 Shore D.

6. Feuille plastique selon l'une des revendications 1 à 5, **caractérisée en ce que** ladite deuxième matière est constituée par un élastomère de polyuréthane thermoplastique.

7. Feuille plastique selon l'une quelconque des revendications précédentes, **caractérisée en ce que** ledit premier matériau forme une première feuille (2, 2B) ayant une pluralité d'ouvertures (4, 4B) remplies au moins partiellement par ledit deuxième matériau.

8. Feuille plastique selon l'une quelconque des revendications 1 à 6, **caractérisée en ce que** ledit premier matériau forme une première feuille (2A) ayant une pluralité de cavités (26) remplies au moins partiellement par ledit deuxième matériau.

9. Procédé de fabrication d'une feuille plastique (22, 24, 32, 40, 22A, 56) intervenant dans la formation d'une pluralité de cartes électroniques qui comprennent respectivement une pluralité d'unités électroniques, cette feuille plastique étant destinée à recevoir au moins partiellement la pluralité d'unités électroniques par pénétration dans la matière qui la forme, **caractérisé en ce que** ce procédé comprend les étapes suivantes :
A) Fournir une première feuille (2, 2A, 2B) formée d'un premier matériau ayant une première dureté ou une première température de ramollissement Vicat, cette première feuille présentant une pluralité d'ouvertures (4, 4B) ou/et de cavités (26) ;
B) Apporter respectivement dans ladite pluralité d'ouvertures ou/et de cavités une pluralité de pastilles (6, 6A, 6B, 6C) formées d'un deuxième matériau ayant une deuxième dureté inférieure à la première dureté, respectivement une deuxième température de ramollissement Vicat inférieure à la première température de ramollissement Vicat, cette pluralité de pastilles présentant dans leur plan géométrique parallèle au plan général (10) de la première feuille des dimensions (D) inférieures à celles des ouvertures ou/et des cavités correspondantes et une hauteur (H), selon un axe perpendiculaire audit plan général, supérieure à celles des ouvertures ou/et des cavités correspondantes, de manière qu'elles s'élèvent au-dessus d'une face (8) de la première feuille;
C) Exercer une pression sur chaque pastille de la pluralité de pastilles de manière à réduire leurs hauteurs respectives pour qu'elles affleurent sensiblement ladite face (8) de la première feuille et qu'elles soient en contact au moins partiellement avec les parois latérales respectives (20, 20B) de ladite pluralité d'ouvertures, respectivement avec les parois latérales respectives ou/et les fonds respectifs de ladite pluralité de cavités ; la pluralité de pastilles étant alors liées à la première feuille.

10. Procédé de fabrication selon la revendication 9, **caractérisé en ce que** les étapes B) et C) sont effectuées cycliquement pour chaque pastille de ladite pluralité de pastilles ou pour des sous-ensembles de pastilles parmi ladite pluralité de pastilles.

11. Procédé de fabrication selon la revendication 9 ou 10, **caractérisé en ce que** ladite étape C) consiste en un écrasement à chaud, la pluralité de pastilles étant au moins partiellement soudées à la première feuille.

12. Procédé de fabrication selon la revendication 11, **caractérisé en ce que** ledit écrasement à chaud est réalisé individuellement pour chaque pastille de ladite pluralité de pastilles au moyen d'une thermode.

## Revendications modifiées

### Revendications modifiées conformément à la règle 137(2) CBE.

**1.** Feuille plastique (22, 24, 32, 40, 22A, 56) pour la fabrication d'une pluralité de cartes électroniques qui comprennent respectivement une pluralité d'unités électroniques (46, 46A), **caractérisée en ce que** cette feuille plastique est formée d'un premier matériau, ayant une première dureté ou une première température de ramollissement Vicat, et d'un deuxième matériau ayant une deuxième dureté inférieure à la première dureté, respectivement une deuxième température de ramollissement Vicat inférieure à la première température de ramollissement Vicat, le deuxième matériau étant situé dans une pluralité de zones (5, 5A, 5B, 5C) de la feuille plastique qui sont respectivement destinées à recevoir au moins partiellement ladite pluralité d'unités électroniques par pénétration de cette pluralité d'unités électroniques dans le deuxième matériau.

**2.** Feuille plastique selon la revendication 1, **caractérisée en ce que** ladite deuxième température de ramollissement Vicat à 10 N est inférieure à cinquante degrés (50°).

**3.** Feuille plastique selon la revendication 1, **caractérisée en ce que** ladite deuxième dureté est inférieure à 96 Shore A.

**4.** Feuille plastique selon l'une des revendications 1 à 3, **caractérisée en ce que** ladite première température de ramollissement Vicat à 10 N est supérieure à soixante cinq degrés (65°)

**5.** Feuille plastique selon l'une des revendications 1 à 3, **caractérisée en ce que** ladite première dureté est supérieure à 60 Shore D.

**6.** Feuille plastique selon l'une des revendications 1 à 5, **caractérisée en ce que** ladite deuxième matière est constituée par un élastomère de polyuréthane thermoplastique.

**7.** Feuille plastique selon l'une quelconque des revendications précédentes, **caractérisée en ce que** ledit premier matériau forme une première feuille (2, 2B) ayant une pluralité d'ouvertures (4, 4B) remplies au moins partiellement par ledit deuxième matériau.

**8.** Feuille plastique selon l'une quelconque des revendications 1 à 6, **caractérisée en ce que** ledit premier matériau forme une première feuille (2A) ayant une pluralité de cavités (26) remplies au moins partiellement par ledit deuxième matériau.

**9.** Procédé de fabrication d'une feuille plastique (22, 24, 32, 40, 22A, 56) intervenant dans la formation d'une pluralité de cartes électroniques qui comprennent respectivement une pluralité d'unités électroniques, cette feuille plastique étant destinée à recevoir au moins partiellement la pluralité d'unités électroniques par pénétration de celle-ci dans la matière qui la forme, **caractérisé en ce que** ce procédé comprend les étapes suivantes :
A) Fournir une première feuille (2, 2A, 2B) formée d'un premier matériau ayant une première dureté ou une première température de ramollissement Vicat, cette première feuille présentant une pluralité d'ouvertures (4, 4B) ou/et de cavités (26) ;
B) Apporter respectivement dans ladite pluralité d'ouvertures ou/et de cavités une pluralité de pastilles (6, 6A, 6B, 6C) formées d'un deuxième matériau ayant une deuxième dureté inférieure à la première dureté, respectivement une deuxième température de ramollissement Vicat inférieure à la première température de ramollissement Vicat, cette pluralité de pastilles présentant dans leur plan géométrique parallèle au plan général (10) de la première feuille des dimensions (D) inférieures à celles des ouvertures ou/et des cavités correspondantes et une hauteur (H), selon un axe perpendiculaire audit plan général, supérieure à celles des ouvertures ou/et des cavités correspondantes, de manière qu'elles s'élèvent au-dessus d'une face (8) de la première feuille ;
C) Exercer une pression sur chaque pastille de la pluralité de pastilles de manière à réduire leurs hauteurs respectives pour qu'elles affleurent sensiblement ladite face (8) de la première feuille et qu'elles soient en contact au moins partiellement avec les parois latérales respectives (20, 20B) de ladite pluralité d'ouvertures, respectivement avec les parois latérales respectives ou/et les fonds respectifs de ladite pluralité de cavités ; la pluralité de pastilles étant alors liées à la première feuille.

**10.** Procédé de fabrication selon la revendication 9, **caractérisé en ce que** les étapes B) et C) sont effectuées cycliquement pour chaque pastille de ladite pluralité de pastilles ou pour des sous-ensembles de pastilles parmi ladite pluralité de pastilles.

**11.** Procédé de fabrication selon la revendication 9 ou 10, **caractérisé en ce que** ladite étape C) consiste en un écrasement à chaud, la pluralité de pastilles étant au moins partiellement soudées à la première feuille.

**12.** Procédé de fabrication selon la revendication 11, **caractérisé en ce que** ledit écrasement à chaud est réalisé individuellement pour chaque pastille de ladite pluralité de pastilles au moyen d'une thermode.
